Europäisches Patentamt

European Patent Office

Office européen des brevets

(19)

(11) **EP 1 108 206 B1**

(12) **EUROPÄISCHE PATENTSCHRIFT**

(45) Veröffentlichungstag und Bekanntmachung des Hinweises auf die Patenterteilung:
**26.11.2003  Patentblatt 2003/48**

(21) Anmeldenummer: **99953561.0**

(22) Anmeldetag: **21.08.1999**

(51) Int Cl.$^7$: **G01N 21/35**

(86) Internationale Anmeldenummer:
**PCT/DE99/02627**

(87) Internationale Veröffentlichungsnummer:
**WO 00/011452 (02.03.2000 Gazette 2000/09)**

(54) **PHOTOMETRISCHES VERFAHREN ZUM ERMITTELN DES BRENNWERTES EINES PRÜFGASES**

PHOTOMETRIC METHOD FOR DETERMINING THE GROSS CALORIFIC VALUE OF A TEST GAS

PROCEDE PHOTOMETRIQUE PERMETTANT DE DETERMINER LE POUVOIR CALORIFIQUE D'UN GAZ D'ESSAI

(84) Benannte Vertragsstaaten:
**AT BE CH CY DE DK ES FI FR GB GR IE IT LI LU MC NL PT SE**

(30) Priorität: **24.08.1998  DE 19838301**

(43) Veröffentlichungstag der Anmeldung:
**20.06.2001  Patentblatt 2001/25**

(73) Patentinhaber: **FLOW COMP Systemtechnik GmbH**
**44357 Dortmund (DE)**

(72) Erfinder:
 • **TACKE, Maurus**
   **D-79104 Freiburg (DE)**
 • **KASTNER, Joachim**
   **D-44143 Dortmund (DE)**

(74) Vertreter:
 **RACKETTE Partnerschaft Patentanwälte**
 **Kaiser-Joseph-Strasse 179**
 **79098 Freiburg (DE)**

(56) Entgegenhaltungen:
 WO-A-98/32003              DE-A- 2 635 769
 US-A- 4 553 032              US-A- 4 594 510
 US-A- 4 800 279

**Beschreibung**

Die Erfindung betrifft ein Verfahren gemäß des Oberbegriffs vom Anspruch 1.

Aus der US-A-4,594,510 ist ein derartiges Verfahren zum photometrischen Ermitteln des Brennwertes eines Prüfgases bekannt. Gemäß diesem Dokument tritt mit einer Strahlungsquelle erzeugte breitbandige Meßstrahlung durch eine mit einem C-H-Bindungen aufweisenden Prüfgas gefüllte Probenzelle hindurch und wird nach Durchtritt durch das Prüfgas mit einer als Spektrometer im mittleren infraroten Spektralbereich bei etwa 3,35 μm ausgebildeten Spektraleinheit spektral zerlegt. Ein Strahlungsempfänger erzeugt entsprechend der ihn in verschiedenen Wellenlängenbereichen beaufschlagenden Intensität der Meßstrahlung elektrische Meßsignale. Die Meßsignale werden einer Auswerteeinheit eingespeist und mit einem durch jeweils einem Wellenlängenbereich zugeordneten Brennwertparameter charakterisierten Verstärkungsgrad verstärkt. Die sich so ergebenden Produkte aus Meßsignal und Brennwertparameter für jeweils einen Spektralwerten werden zum Bestimmen des Brennwertes aufsummiert.

Die Anzahl der verwendeten, als im Verhältnis zu der spektralen Breite von C-H-Schwingungsbanden schmale Spektrallinien ausgebildeten Wellenlängenbereiche entspricht dabei der Anzahl der für eine Kalibrierung erforderlichen Standards, wobei so viele Standards vorhanden sein müssen, wie zu untersuchende brennbare Komponenten in dem Prüfgas vorhanden sein können.

Zwar sind gemäß der aus diesem Dokument vorbekannten Vorgehensweise durch direktes Bestimmen des Beitrags jeder mutmaßlich vorhandenen brennbaren Komponente des Prüfgases der Brennwert bestimmbar, indem bei möglichst hoher spektraler Auflösung die Beiträge verschiedener Komponenten wie beispielsweise Propan, Ethan und Methan separat bestimmt werden, allerdings führen die Notwendigkeit, für hinreichend genaue Meßergebnisse ein verhältnismäßig hoch auflösendes Spektrometer verwenden zu müssen, und das Erfordernis, bei Prüfgasen mit einer Vielzahl von grundsätzlich vorhandenen und damit auch über die Standards sowie eine entsprechende Anzahl von Spektralwerten zu erfassenden Komponenten die Intensitäten der transmittierten Meßstrahlung bei einer Vielzahl von Spektrallinien als spektrale Stützstellen erfassen zu müssen, zu verhältnismäßig aufwendigen apparativen Aufbauten und Meßverfahren.

Aus der DE-A-48 00 279 ist bei Verfahren und Vorrichtungen zur Bestimmung von physikalischen Eigenschaften von Proben im nahen infraroten Spektralbereich bekannt, ein Fouriertransformationsspektrometer zu verwenden.

Aus der US-A-4,800,279 ist die Benutzung eines Interferometers zur Absorptionsspektroskopie bekannt.

Aus der WO 98/32003 A ist bekannt, nicht zum Brennwert beitragende störende Fremdgase zu untersuchen.

In dem Beitrag von H.N. Heise mit dem Titel "Infrarotspektrometrische Gasanalyse" aus "Infrarotspektroskopie", herausgegeben von H. Günzier, Springer-Verlag, Heidelberg 1996, sind sowohl dispersive als auch nicht dispersive Verfahren und Spektrometer zur Durchführung dieser Verfahren offenbart. Während eine dispersive Vorrichtung ein dispersives Element wie beispielsweise ein Gitter zum räumlichen Aufspalten von Infrarotstrahlung in Abhängigkeit ihrer Wellenlänge aufweist, verfügen die offenbarten nichtdispersiven Vorrichtungen beispielsweise über eine Filtervorrichtung zum Auswählen einer Wellenlänge.

Der Brennwert eines Gases stellt einen Zusammenhang zwischen dem bei einer Verbrennung verbrauchten Gasvolumen und der dabei erzeugten Wärmemenge her und hat beispielsweise für die Regelungstechnik erdgasbetriebener Anlagen eine große Bedeutung erlangt. Bei Gasgemischen wie beispielsweise Erdgas ist der Brennwert von der Zusammensetzung des Gasgemisches abhängig. Üblicherweise dient bei einem Kauf von Erdgas das Gasvolumen als Berechnungsgrundlage für den Kaufpreis, wobei der Gasbrennwert mittelbar auf das Kaufgeschäft einwirkt. Demnach setzt ein volumenbezogener Kaufpreis die Kenntnis des Brennwertes des zum Kauf beabsichtigten Gases voraus, um einen höheren Kaufpreis für Gase mit hohem Brennwert gegenüber günstigeren Angeboten zu rechtfertigen.

Auf Grund der zunehmend voranschreitenden Liberalisierung des Energiemarktes, die mit dem Fall regionaler Energiemonopole gekoppelt ist, werden bereits in naher Zukunft Erdgase verschiedenster Anbieter und Zusammensetzung in gemeinsame Rohrleitungssysteme eingespeist werden. Damit ist die Qualität des Erdgases, das ein Endabnehmer dem Rohrleitungssystem entnimmt, vor seiner Entnahme nicht bekannt, so daß Probleme bezüglich volumenbezogener Kaufpreisabrechnungen auftreten können. Es wäre daher wünschenswert über ein Verfahren und eine Vorrichtung zu verfügen, die ein schnelles und meßtechnisch wenig aufwendiges Bestimmen des Brennwertes eines Gases beispielsweise bei dessen Entnahme aus einem Rohrleitungssystem ermöglichen. Auf diese Weise kann bei der Berechnung der Kosten auf die mit dem Gas erzielbare Wärmemenge abgestellt werden, ohne daß der Anbieter des Gases oder dessen genaue Zusammensetzung bekannt sein muß.

Die direkte Messung des Brennwertes eines Gases erfolgt üblicherweise in Kalorimetern. Dabei wird ein vorgegebenes Volumen des Prüfgases verbrannt und die daraufhin an eine definierte Menge eines Kühlmediums abgegebene Wärmeenergie über die Temperaturerhöhung des Kühlmediums gemessen. Als Kühlmedium eignen sich beispielsweise Luft oder Wasser. Während bei einer Verwendung von Wasser sich trotz der hohen Genauigkeit die große Trägheit der Messung als nachteilig für die schnelle Erfassung des Brennwertes eines Erdgases erweist, liegen die Nachteile bei der Verwendung von Luft als Kühlmedium vor allem in der komplizierten Mechanik zur Einstellung eines bestimmten Mengenverhältnisses von Gas, Verbrennungsluft und Kühlluft.

Weiterhin sind kostenintensive Kalorimeter auf der Basis stöchiometrischer Verbrennungen bekannt, bei denen ein bestimmter, zur Verbrennung einer festgelegten Menge an Prüfgas benötigter Luftbedarf ermittelt wird.

Eine Methode zur indirekten Brennwertbestimmung ist die Gaschromatographie, bei der die Gaszusammensetzung quantitativ bestimmt und unter Kenntnis der Brennwerte der einzelnen Komponenten der Brennwert des gesamten Gasgemisches berechnet wird. Die Nachteile der Gaschromatographie liegen in den hohen Anschaffungskosten der dazu notwendigen Apparaturen sowie in dem zur Bedienung notwendigen qualifizierten Personal.

Vorbekannte photometrische Methoden zur Bestimmung des Brennwertes stellen im Vergleich zur Gaschromatographie weniger hohe Ansprüche an die zur Durchführung der Verfahren notwendige apparative Ausstattung und weisen gegenüber der kalorimetrischen Praktik vor allem den Vorteil einer kurzen Meßzeit auf. Dabei wird ein Absorptionsspektrum des Erdgases im nahen oder mittleren infraroten Spektralbereich, das sich aus der Summe der Einzelspektren der im Gas vorhandenen Gaskomponenten additiv zusammensetzt, gemessen und mit Hilfe geeigneter Spektrenanalyseverfahren analysiert. Der auf diese Weise gefundene Anteil der Absorption einer Komponente an dem Gesamtspektrum ist dem Konzentrationsanteil dieser Komponente im Prüfgas im wesentlichen gleich. Anschließend wird mit Kenntnis des jeweiligen Brennwertes der Komponenten der Brennwert des gesamten Gasgemisches berechnet. Die Spektrenanalyse ist jedoch aufgrund der starken Überlappung der Absorptionsbanden unterschiedlicher Gaskomponenten schwierig, führt oftmals zu ungenauen Ergebnissen und erfordert einen sehr hohen Rechenaufwand.

Der Erfindung liegt die Aufgabe zugrunde, ein Verfahren der eingangs genannten Art so weiterzubilden, dass auch bei einer verhältnismäßig niedrigen spektralen Auflösung und einer verhältnismäßig geringen Anzahl von spektralen Stützstellen eine verhältnismäßig genaue Brennwertermittlung eines in seiner stofflichen Zusammensetzung unbekannten Prüfgases geschaffen ist.

Diese Aufgabe wird bei einem Verfahren der eingangs genannten Art erfindungsgemäß durch die kennzeichnenden Merkmale des Anspruchs 1 gelöst.

Die bei der Gasverbrennung erzeugte Reaktionswärme beruht auf der Oxidation von C-H-Bindungen, wobei die dabei jeweils erzeugte Wärmemenge von der jeweiligen Bindungsenergie abhängig ist. Die Erfindung basiert auf der Überlegung, daß die Schwingungen der C-H-Bindungen, die eine zueinander gleiche, bestimmte Bindungsenergie aufweisen und bei einer Verbrennung die gleiche Wärmemenge erzeugen, bei einer zugeordneten Wellenlänge in Wechselwirkung mit einer elektromagnetischen Strahlung treten. Unter dieser Voraussetzung ist durch wellenlängenaufgelöstes Messen und einer wellenlängenabhängigen Gewichtung der Wechselwirkungsgrade dieser Schwingungen die Berechnung des Brennwertes des Gases möglich. Eine Zuordnung der C-H-Schwingungen zu bestimmten vorbekannten Komponenten des Gases ist somit allenfalls im Rahmen zusätzlicher Korrekturverfahren erforderlich, so daß eine oftmals fehlerbehaftete rechenaufwendige Spektrenanalyse vermeidbar ist. Die spektralen Brennwertparameter sind neben der zugeordneten Wellenlänge von der Breite des jeweils detektierten spektralen Bereichs abhängig.

Bei einer Ausführung des erfindungsgemäßen Verfahrens wird die Meßstrahlung räumlich in Abhängigkeit der Wellenlänge aufgespalten.

Bei einer weiteren Ausführung des erfindungsgemäßen Verfahrens wird die Meßstrahlung mit Spektralfiltern spektral zerlegt.

Zweckmäßigerweise werden bei einer Weiterbildung des erfindungsgemäßen Verfahrens Meßsignale aus dem Spektralbereich der C-H-Schwingungen und insbesondere, aus dem Bereich zwischen 3 µm und 4 µm verstärkt werden.

Bei einer anderen zweckmäßigen Weiterbildung des erfindungsgemäßen Verfahrens werden Meßsignale aus dem Spektralbereich der C-H-Oberschwingungen und insbesondere aus dem Bereich zwischen 1,5 µm und 2 µm verstärkt.

Weitere zweckmäßige Ausgestaltungen und Vorteile der Erfindung sind Gegenstand der nachfolgenden Beschreibung von erfindungsgemäßen Ausführungsbeispielen unter Bezug auf die Figuren der Zeichnung. Es zeigen:

Fig. 1 eine schematische Darstellung eines Ausführungsbeispiels der erfindungsgemäßen photometrischen Vorrichtung mit einem Prisma,

Fig. 2 die photometrische Vorrichtung gemäß Fig. 1 mit einem Gitter und

Fig. 3 die photometrische Vorrichtung gemäß Fig. 1 mit einem Filterrad zum Schalten einer Infrarotstrahlung.

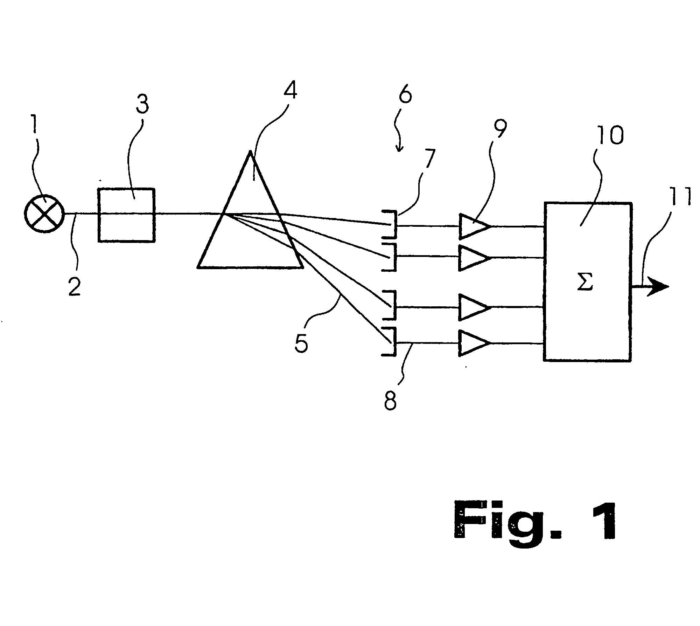

Fig. 1 zeigt eine schematische Darstellung eines Ausführungsbeispiels der erfindungsgemäßen Vorrichtung. Die von einer Strahlungsquelle 1 als Meßstrahlung erzeugte breitbandige, den mittleren infraroten Spektralbereich von 3 µm bis 12 µm abdeckende Infrarotstrahlung 2 durchsetzt die mit Prüfgas befüllte Probenzelle 3 und trifft anschließend auf ein der Probenzelle 3 nachgeordnetes Prisma 4 als dispersives Element. Durch das Prisma 4 wird die breitbandige Infrarotstrahlung 2 in Abhängigkeit ihrer Wellenlänge räumlich aufgespalten. Diese Aufspaltung ist in Fig. 1, durch die sich fächerartig ausbreitenden Teilstrahlen 5 verdeutlicht, von denen aus Gründen der Übersichtlichkeit lediglich vier aufgeführt sind, deren Anzahl jedoch in einem einfachen spektral grobauflösenden Ausführungsbeispiel 10 beträgt.

Im Weg einiger Teilstrahlen 5 ist eine Detektorzeile 6 mit nebeneinanderliegenden Detektorelementen 7 derart angeordnet, daß jedes Detektorelement 7 einem bestimmten, zuvor festgelegten Teilstrahl 5 und somit einem Wellenlängenbereich mit einer festgelegten Breite und einer festgelegten mittleren Wellenlänge zugeordnet ist. Die spektrale Breite der von einem Detektorelement 7 detektierten Infrarotstrahlung 2 ist von der Auflösung der photometrischen Vorrichtung abhängig.

Die Drehung des Prismas 4 ermöglicht die Auswahl des für die Messung verwendeten Spektralbereichs. In dem gezeigten Ausführungsbeispiel ist das Prisma 4 derart bezüglich der einfallenden Infrarotstrahlung 2 ausgerichtet, daß die Detektorelemente 7 einen Spektralbereich zwischen 3,2 µm und 3,6 µm erfassen. Die Infrarotstrahlung 2 dieses Spektralbereichs wird von den Schwingungen der C-H-Bindungen des Prüfgases absorbiert. In einem abweichenden Ausführungsbeispiel liegen die Wellenlängen der breitbandigen Infrarotstrahlung 2 im nahen infraroten Spektralbereich, wobei das Prisma 4 derart bezüglich der Infrarotstrahlung 2 ausgerichtet ist, daß die Detektorelemente 7 einen Spektralbereich zwischen 1,6 µm und 1,8 µm erfassen. In diesem Spektralbereich liegt die Absorptionsbande der ersten Oberschwingung der C-H-Bindung. Zwar ist im Vergleich mit der Grundschwingung die Absorption der Oberschwingung der C-H-Bindungen schwächer. Der nahe infrarote Spektralbereich weist jedoch im Hinblick auf die meßtechnischen Anforderungen Vorteile gegenüber dem mittleren infraroten Spektralbereich auf.

Die Detektorelemente 7 umfassen jeweils eine nicht gezeigte elektronische Schaltung, die zum Erzeugen einer spektralen Absorption $\alpha_{\lambda i}$ mit einer zugeordneten Wellenlänge $\lambda i$ das jeweilige Meßsignal auf ein ohne Prüfgas erhaltenes Meßsignal normiert und das normierte Meßsignal anschließend elektronisch logarithmiert. Die so erzeugten spektralen Absorptionswerte oder Probenwechselwirkungsgrade werden über Meßsignalleitungen 8 jeweils einem Signalverstärker 9 zugeführt, dessen Verstärkungsgrad durch Anlegen einer Steuerspannung mittels nicht gezeigter Steuerspannungsquellen jeweils derart eingestellt ist, daß dieser einem spektralen Brennwertparamter $b_{\lambda i}$ mit einer zugeordneten Wellenlänge $\lambda i$ entspricht. Dabei ist der eingestellte spektrale Brennwertparameter $b_{\lambda i}$ jeweils auf die spektrale Breite und die mittlere Wellenlänge $\lambda i$ der Infrarotstrahlung bezogen, die von dem jeweils zugeordneten Detektorelement 7 erfaßt ist.

Die durch die Verstärkung erzeugten und über das Absorptionsspektrum verteilten spektralen Brennwerte $\alpha_{\lambda i} \cdot b_{\lambda i}$ werden anschließend in einem Summenspeicher, der in diesem Ausführungsbeispiel als Summenschaltung 10 ausgebildet ist, aufsummiert, so daß dessen Ausgangssignal 11 dem Brennwert des Prüfgases entspricht. Das Ausgangssignal wird anschließend einer nicht gezeigten Ausgabeeinheit wie beispielsweise einer numerischen Anzeigetafel zugeführt, die dem Benutzer den ermittelten Brennwert des Prüfgases anzeigt.

Das verstärken und Aufsummieren gemessener spektraler Absorptionen in der Summenschaltung 10 zum Berechnen des Brennwertes B ist durch die Formel

$$B = \Sigma_i \alpha_{\lambda i} \cdot b_{\lambda i} \qquad (1)$$

darstellbar. Dem für die Einstellung der Signalverstärker 9 notwendigen Satz spektraler Brennwertparameter $b_{\lambda i}$ kommt für die Ermittlung des Brennwertes B des Prüfgases eine entscheidende Bedeutung zu. Die spektralen Brennwertparameter $b_{\lambda i}$ sind neben der zugeordneten Wellenlänge, $\lambda i$ von der Breite des jeweils detektierten Wellenlängenbereichs abhängig. Eine Verringerung der Anzahl der in der Detektorzeile 6 angeordneten Detektorelemente 7 führt demnach zwangsläufig zu einer Verringerung der über den beobachteten Spektralbereich von 3,2 µm bis 3,6 µm zur Verfügung stehenden Stützstellen und in der Regel zu einer Verbreiterung des von den Detektorelementen 7 jeweils detektierten Wellenlängenbereichs. Diese Einflußgrößen sind bei der Ermittlung der spektralen Brennwertparameter beispielsweise durch numerische Berechnungsverfahren zu berücksichtigen, indem die Zwischenergebnisse der numerischen Verfahren durch geeignet ausgewählte Anpassungsparameter an die jeweils verwendete photometrische Vorrichtung angepaßt werden. Zweckmäßigerweise wird ein Satz spektraler Brennwertparameter $b_{\lambda i}$ empirisch ermittelt, wobei ein oder mehrere Prüfgase mit bekanntem Brennwert und bekannter Zusammensetzung untersucht und die spektralen Brennwertparameter $b_{\lambda i}$ solange variiert werden, bis der ermittelte Brennwert mit dem vorbekannten Brennwert übereinstimmt.

Zum Ermitteln eines Satzes spektraler Brennwerte wird der spektrale Brennwertparameter $b_{\lambda i}$ beispielsweise nach

$$b_{\lambda i} = r + s/\lambda i + t/\lambda i^2 + ... \qquad (2)$$

entwickelt, wobei r, s und t Paßparameter sind. Das Hinzunehmen höherer Glieder erhöht die Genauigkeit der Kalibrierung. Ein Abbruch nach dem zweiten Glied kann für die meisten Anwendungen jedoch als ausreichend betrachtet werden. Zur Kalibrierung werden die spektralen Absorptionen $\alpha_{\lambda i}$ von Eichgasen und Eichgasmischungen mit bekanntem Brennwert $B_{Bek}$ gemessen. Durch Einsetzen von Gleichung (2) in Gleichung (1) berechnet sich mit dem jeweils gemessenen Satz spektraler Absorptionen $\alpha_{\lambda i}$ und möglichst passend gewählten Anfangswerten der Paßparameter r, s, t ... ein berechneter oder gemessener Brennwert B. Mit Hilfe eines üblichen Anpaßverfahrens beispielsweise auf der Grundlage der kleinsten Fehlerquadrate werden die Paßparameter anschließend solange variiert bis die Summe der Abweichungen der berechneten Brennwerte B von den bekannten Brennwerten $B_{Bek}$ ein Minimum erreicht. Beim Durchführen der Eichmessung ist darauf zu achten, das die verwendeten Eichgasmischungen nicht als Linearkombination auseinander hervorgehen.

Die Auswerteeinheit des in Fig. 1 dargestellten Ausführungsbeispiels umfaßt sämtliche elektrischen Schaltungen, die das von der Detektorzeile 6 erzeugte Signal verarbeiten und insbesondere den Signalverstärker 9, die nicht gezeigten Steuerspannungsquellen sowie den Summenspeicher 10. Davon abweichend kann die erfindungsgemäße Auswerteeinheit als eine passend eingerichtete Recheneinrichtung ausgebildet sein. Dabei sind die Detektorelemente 7 der Detektorzeile 6 über die Meßsignalleitung 8 mit einer nicht gezeigten Multifunktionskarte der Recheneinrichtung verbunden. Weiterhin weist ein zur Steuerung des Auswerteverfahrens vorgesehenes Meßprogramm der Recheneinrichtung eine zentrale Recheneinheit (CPU) der Recheneinrichtung an, die von der Multifunktionskarte digitalisierten Meßsignale zum Verstärken mit zugeordneten spektralen Brennwertparametern zu multiplizieren. Die dazu erforderlichen spektralen Brennwertparameter sind in einem Verstärkungsparameterspeicher abgelegt. Anschließend weist das Steuerungsprogramm die Recheneinrichtung an, die Summe dieser Produkte und somit den Brennwert des Gases zu berechnen.

Im Prüfgas vorhandene Fremdteilchen wie beispielsweise Kohlendioxid, die zwar einen Beitrag zu den gemessenen Absorptionen liefern, jedoch keine oxidierbaren zum Brennwert beitragende C-H-Bindungen enthalten, stören die Berechnung des Brennwertes. Um die Absorption solcher Fremdteilchen zu erkennen und deren Einfluß auf den ermittelten Brennwert zu verringern, wird das Spektrum des Prüfgases zwischen 3 μm und 12 μm aufgezeichnet. Dazu wird das Prisma 4 durch einen nicht gezeigten Prismenantrieb in Drehung versetzt. Der Prismenantrieb verfügt über einen Winkelstellungsgeber, der elektrische Signale in Abhängigkeit der Winkelstellung des Prismas und damit in Abhängigkeit der von einem bestimmten Detektorelement 7 erfaßten mittleren Wellenlänge erzeugt. Das bestimmte Detektorelement 7 und der Winkelstellungsgeber sind mit einer nicht gezeigten Speichereinheit verbunden, die die erhaltenen Signale paarweise als Spektrum speichert.

Das in dem Spektrenspeicher abgelegte Spektrum wird anschließend auf charakteristische Absorptionsbanden von Fremdteilchen hin untersucht. Dazu greift beispielsweise ein Spektrenanalyseprogramm auf einen Referenzspektrenspeicher zu, in dem eine Reihe unterschiedlicher Referenzspektren von Fremdteilchen abgespeichert sind. Erkennt das Spektrenanalyseprogramm aufgrund des Vergleichs des gemessenen Spektrums mit den Referenzspektren charakteristische Absorptionsbanden eines Fremdteilchens, zieht es einen solchen Anteil des Referenzspektrums von dem gesamten gemessenen Absorptionsspektrum ab, daß die charakteristischen Absorptionsbanden nicht mehr erkennbar sind.

Erfindungsgemäß kann der Spektralbereich, in dem das Prüfgas gemessen ist, über den mittleren infraroten Spektralbereich hinausgehen, da die Fremdteilchen zwar eine merkliche Absorption im Infrarot aufweisen, die zur Zuordnung notwendigen charakteristischen Banden jedoch beispielsweise im nahen infraroten oder sichtbaren Spektralbereich liegen. Dazu ist es gegebenenfalls erforderlich die in Fig. 1 gezeigten wellenlängenabhängigen Bauteile wie beispielsweise die Strahlungsquelle 1 und die Detektorzeile 6 durch Bauteile zu ersetzen, die für den Einsatz in einem anderen Wellenlängenbereich geeignet sind.

Die Spektreninformation kann darüber hinausgehend zur Bereitstellung geeigneter spektraler Brennwertparameter von besonderen Molekülen verwendet werden, die zum Brennwert beitragende C-H-Bindungen aufweisen, sich aufgrund ihrer Struktur oder Zusammensetzung jedoch von in der Regel zu erwartenden Molekülen unterscheiden. So weisen beispielsweise Moleküle wie Zyklohexan, Aromate oder Methyljodid eine chemische Zusammensetzung oder Struktur auf, die von den in Erdgas hauptsächlich vorhandenen Gasen wie beispielsweise Methan, Ethan abweicht. Die chemisch unterschiedliche Struktur solcher besonderen Moleküle verändert in der Regel das Absorptionsverhalten der C-H-Schwingungen und kann dazu führen, daß deren Anteil am Brennwert nicht erfaßt wird. Der Beitrag besonderer Moleküle am Brennwert eines Gases ist zur Vermeidung ungenauer Messungen gegebenenfalls zu berücksichtigen.

Die Absorptionen besonderer Moleküle werden daher in einem zusätzlichen Näherungsverfahren berücksichtigt. Dazu wird das Spektrum wie bereits im Zusammenhang mit dem Aufspüren von Fremdteilchen beschrieben wurde über den gesamten Spektralbereich, der über den mittleren infraroten Spektralbereichs hinausgehen gehen kann, auf charakteristische Absorptionen hin untersucht, die wie zuvor beschrieben von einem Spektrenanalyseprogramm durch Vergleich mit Referenzspektren erkannt werden.

Den jeweils erkannten Molekülen ist ein Parametersatz $b_{1,\lambda i,\lambda j}$ zugeordnet, der in einem Hilfsparameterspeicher gespeichert ist. Der zusätzliche Beitrag $B_1$ des besonderen Moleküls zum Brennwert berechnet sich nach

$$B_1 = \Sigma_i \alpha_{\lambda i} \cdot \Sigma_j \alpha_{\lambda j} \cdot b_{1,\lambda i,\lambda j} = \Sigma_{ij} \alpha_{\lambda i} \cdot \alpha_{\lambda j} \cdot b_{1,\lambda i,\lambda j}, \quad (3)$$

wobei die Summation über j dem anhäufenden Abtasten von Stützstellen $\lambda j$ innerhalb eines Spektralbereiches entspricht, der gegenüber dem ursprünglichen, $\lambda i$ zugeordneten Spektralbereich spektral verschoben ist. Der Parametersatz $b_{1,\lambda i,\lambda j}$ kann durch ein geeignetes Kalibierungsverfahren gewonnen werden. Der durch dieses zusätzliche Verfahren gewonnene zusätzliche Brennwert $B_1$ wird zu dem Brennwert B hinzuaddiert, um den gesamten Brennwert $B_{ges}$ des Gases zu berechnen.

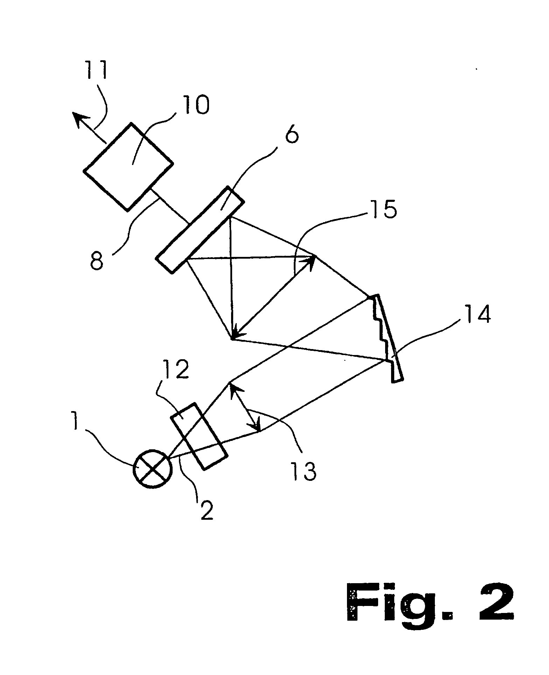

Fig. 2 zeigt eine photometrische Vorrichtung gemäß Fig. 1 mit einem ausführlicher eingezeichneten Strahlengang. Die Strahlungsquelle 1 erzeugt die breitbandige Infrarotstrahlung 2, die über eine abbildende Optik 12 und einen Kollimator 13 als im wesentlichen paralleler Strahl auf ein optisches Gitter 14 trifft, um von diesem in Abhängigkeit der Wellenlänge räumlich aufgespalten zu werden. Das optische Gitter 14 ist als Reflexionsgitter ausgebildet, so daß die räumlich aufgespaltene Infrarotstrahlung 2 reflektiert wird und anschließend auf eine Optik 15 trifft, die den aufgespaltenen Lichtstrahl auf die Detektorzeile 6 hin bündelt. Die Detektorzeile 6 besteht wiederum aus nicht gezeigten nebeneinander angeordneten Detektorelementen. Aufgrund der räumlichen Aufspaltung des Lichtstrahls erfaßt jedes Detektorelement einen bestimmten Spektralbereich der Infrarotstrahlung 2 und wird in Abhängigkeit der spektralen Lage sowie der spektralen Breite dieser Strahlung jeweils von nicht gezeigten Signalverstärkern verstärkt. Dabei ist der Verstärkungsgrad der Signalverstärker derart eingestellt, daß dieser einem spektralen Brennwertparameter $b_{\lambda i}$ entspricht. Die spektralen Brennwerte $\alpha_{\lambda i} \cdot b_{\lambda i}$ werden anschließend in dem Summenspeicher 10 aufsummiert und ergeben den Brennwert des Prüfgases als Ausgangssignal 11.

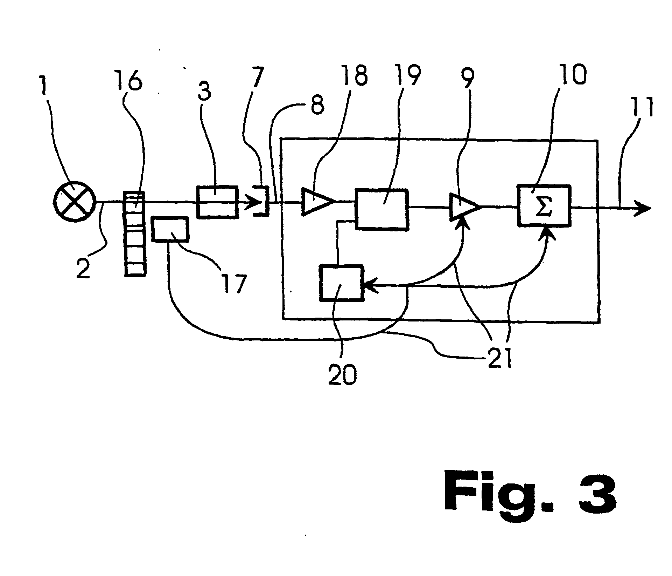

Fig. 3 zeigt ein Ausführungsbeispiel der erfindungsgemäßen Vorrichtung mit einem Filterrad 16 als Schalteinheit zum Schalten der Wellenlänge der Infrarotstrahlung 2. Das Filterrad 16 verfügt über im wesentlichen senkrecht zur Infrarotstrahlung 2 ausgerichtete Filter, die lediglich einen bestimmten Spektralbereich der breitbandigen Infrarotstrahlung transmittieren, so daß durch Drehen des Filterrades 16 über einen Filterradantrieb 17 eine Wellenlänge beziehungsweise ein Wellenlängenbereich für die jeweilige Messung auswählbar ist. Der Filterradantrieb 17 ist mit einem Positionsgeber versehen, der Signale in Abhängigkeit der Filterstellung erzeugt.

Im Wege der gefilterten Infrarotstrahlung 2 ist der Probenzelle 3 nachgeordnet das Detektorelement 7 vorgesehen, das in Abhängigkeit der Infrarotstrahlungsintensität ein elektrisches Meßsignal erzeugt. Das Meßsignal wird über die Meßsignalleitung 8 einem Vorverstärker 18 zum Verstärken des Meßsignals unabhängig von der Wellenlänge zugeführt und das vorverstärkte Meßsignal anschließend durch ein Referenzsignal dividiert, das bei gleicher Stellung des Filterrades 16 aufgenommen wurde und in einem Referenzspeicher 20 abgelegt ist. Um das vorverstärkte Meßsignal dem bei entsprechender Wellenlänge aufgenommenen Referenzsignal zuzuordnen, ist der Referenzspeicher 20 mit dem Positionsgeber des Filterrades 17 über die Positionsleitung 21 elektrisch verbunden. Das in der Subtrahierschaltung 19 normierte Meßsignal wird anschließend zur Erzeugung eines Absorptionssignals elektronisch logarithmiert und dem Signalverstärker 9 zugeführt, der wiederum über die Positionsleitung 21 mit dem Positionsgeber des Filterradantriebes 17 verbunden ist.

Wechselt der Filterradantrieb 17 durch Drehen des Filterrades 16 den für die Absorptionsmessung verwendeten Spektralbereich der Infrarotstrahlung 2, erzeugt der Positionsgeber des Filterradantriebes 17 ein dieser neuen Stellung zugeordnetes elektrisches Signal, das nicht gezeigte Einstellmittel des Signalverstärkers 9 anweist, den beispielsweise durch eine Steuerspannung einstellbaren Verstärkungsgrad des Signalverstärkers 9 derart an die Meßbedingungen anzupassen, daß er einem spektralen Brennwertparameter $b_{\lambda i}$ und das nunmehr in Abhängigkeit der Wellenlänge verstärkte Absorptionssignal einem spektralen Brennwert $\alpha_{\lambda i} \cdot b_{\lambda i}$ entspricht. Die spektralen Brennwerte werden in der Summenschaltung 10 aufsummiert.

Zweckmäßigerweise sind die in dem Filterrad 16 angeordneten Filter derart ausgewählt, daß durch Drehung des Filterrades 16 um 360 Grad ein Spektralbereich zwischen $3\,\mu m$ und $12\,\mu m$ abgetastet wird. Nach vollständiger Drehung des Filterrades 16 wird die Summenschaltung 10 durch den Positionsgeber des Filterradantriebes 17 über die Positionsleitung 21 angewiesen, den gemessenen Brennwert des Prüfgases über das Ausgangssignal 11 an eine nicht gezeigte Anzeigeeinheit abzugeben.

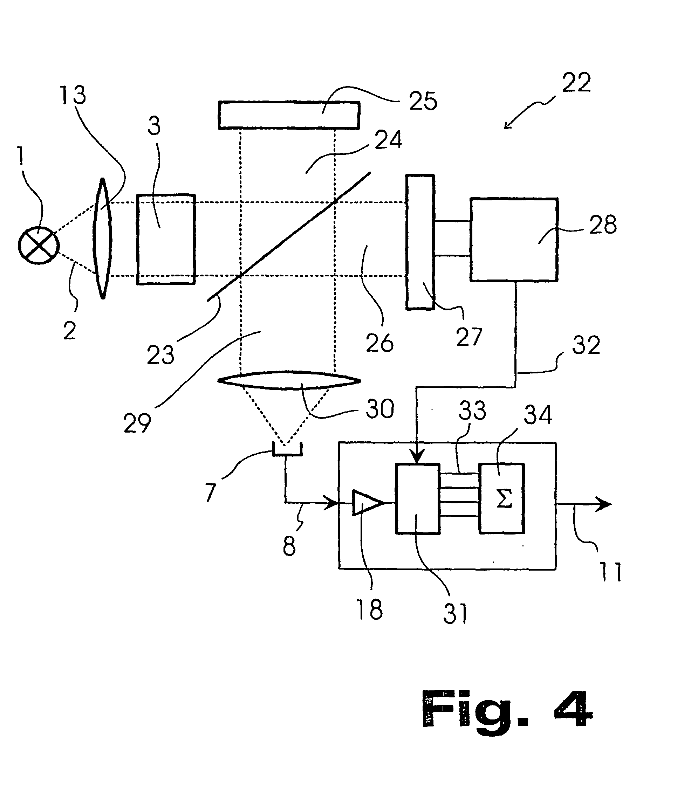

Fig. 4 zeigt ein Ausführungsbeispiel der erfindungsgemäßen photometrischen Vorrichtung mit einem Interferometer 22 als Modulationseinheit. Das dem Kollimator 13 und der Probenzelle 3 nachgeordnete Interferometer 22 umfaßt einen Strahlteiler 23 zum Aufteilen der Infrarotstrahlung 2 auf eine optische Wegstrecke 24, die von einem ortsfesten Spiegel 25 begrenzt ist, und auf eine optische Wegstrecke 26, die von einem beweglichen Spiegel 27 begrenzt ist. Der bewegliche Spiegel 27 ist zum Modulieren der Infrarotstrahlung 2 mit einem Stellglied 28 verbunden. Die Bewegung des Stellgliedes 28 erfolgt beispielsweise nach dem Prinzip eines elektrodynamischen Lautsprechers.

In den optischen Wegstrecken 24, 26 werden die Infrarotstrahlungsteile von beiden Spiegeln 25 und 27 in sich zurückreflektiert, so daß sie sich in einem gemeinsamen Überlagerungsstrahlengang 29 überlagern. Die miteinander interferierenden Strahlungsfelder werden durch eine geeignete Optik 30 auf das Detektorelement 7 hin gebündelt, das ein elektrisches Meßsignal erzeugt, welches über die Meßsignalleitung 8 dem Vorverstärker 18 zum Vorverstärken des Meßsignals unabhängig von der Wellenlänge zugeführt wird.

Das in Abhängigkeit der Stellung des beweglichen Spiegels 27 gemessene Signal entspricht einer Fouriertransformation des Spektrums der Infrarotstrahlung 2. Das vorverstärkte Meßsignal wird in einem elektronischen Filter 31, der über eine Kopplungsleitung 32 mit dem Stellglied 28 verbunden ist, in elementare Frequenzbereich zerlegt. Diese in Abhängigkeit der Stellung des beweglichen Spiegels 27 durchgeführte Zerlegung entspricht einer elektronischen Fouriertransformation und liefert wiederum wellenlängenabhängige Absorptionssignale als Probenwechselwirkungssignale, die über Absorptionssignalleitungen 33 einer Schaltung 34 zugeführt werden, die die Absorptionssignale in Abhängigkeit der Frequenz beziehungsweise Wellenlänge und der bei der Messung erzielbaren spektralen Auflösung verstärkt und die so in Abhängigkeit der Wellenlänge verstärkten spektralen Brennwerte $\alpha_{\lambda i} \cdot b_{\lambda i}$ in einer Summenschaltung aufsummiert, um anschließend das Ausgangssignal 11 an eine nicht gezeigte Anzeigeeinheit auszugeben.

Die Auswerteeinheiten der in den Fig. 2 bis 4 gezeigten Ausführungsbeispiele der Erfindung entsprechen einer elektronischen Schaltung. wie bereits bezüglich Fig. 1 erläutert wurde, kann die elektronische Auswerteeinheit erfindungsgemäß durch die Verwendung digitaler Elektronik wie beispielsweise digitale Signalprozessoren oder eine Recheneinrichtung ersetzt werden. Die im Zusammenhang mit dem Ausführungsbeispiel von Fig. 1 beschriebenen Korrekturmaßnahmen zur Berücksichtigung von Fremdteilchen und besonderen Molekülen, sind ebenfalls bei den anderen beschriebenen Ausführungsbeispielen anwendbar.

Weiterhin ist es vorstellbar, Messungen bei verschiedenen Drücken und Temperaturen durchzuführen, wobei für jede Temperatur beziehungsweise Druck ein entsprechender Satz von spektralen Brennwertparametern zur Verfügung gestellt wird.

**Patentansprüche**

1. Verfahren zur photometrischen Ermittlung des Brennwertes eines Prüfgases, bei dem breitbandige Meßstrahlung das C-H-Bindungen aufweisende Prüfgas beaufschlagt und durch das Prüfgas durchgetretene Meßstrahlung spektral zerlegt wird und einen Strahlungsempfänger beaufschlagt, mit dem entsprechend der ihn in verschiedenen Wellenlängenbereichen beaufschlagenden Intensität der Meßstrahlung elektrische Meßsignale erzeugt werden, die mit einem vorbestimmten Verstärkungsgrad, der durch einen einem Wellenlängenbereich zugeordneten Brennwertparameter ($b_{\lambda i}$) charakterisiert ist, verstärkt und aufsummiert werden, wobei aus den aufsummierten Meßsignalen der Brennwert des Prüfgases bestimmt wird, **dadurch gekennzeichnet, daß** die Intensität der Meßstrahlung in Wellenlängenbereichen detektiert wird, die den Spektralbereich erfassen, in dem die Schwingung oder die Oberschwingung der C-H-Bindungen liegen, wobei die Anzahl der Wellenlängenbereiche von den spektralen Breiten und mittleren Wellenlängen der Wellenlängenbereiche abhängt, um die Intensität der Meßstrahlung in dem Spektralbereich zu erfassen.

2. Verfahren nach Anspruch 1, **dadurch gekennzeichnet, daß** die Meßstrahlung (2) räumlich in Abhängigkeit der Wellenlänge aufgespalten wird.

3. Verfahren nach Anspruch 1, **dadurch gekennzeichnet, daß** die Meßstrahlung mit Spektralfiltern spektral zerlegt wird.

4. Verfahren nach Anspruch einem der Ansprüche 1 bis 3, **dadurch gekennzeichnet, daß** Meßsignale aus dem Spektralbereich der C-H-Schwingungen und insbesondere aus dem Bereich zwischen 3 μm und 4 μm verstärkt werden.

5. Verfahren nach einem der Ansprüche 1 bis 3, **dadurch gekennzeichnet, daß** Meßsignale aus dem Spektralbereich der C-H-Oberschwingungen und insbesondere aus dem Bereich zwischen 1,5 μm und 2 μm verstärkt werden.

**Claims**

1. Method for photometric determination of the heat of combustion of a test gas, whereby the test gas containing C-H bonds is irradiated with broad-band measuring radiation and the measuring radiation passing through the test gas undergoes spectral splitting and falls upon a radiation receiver with which electrical measurement signals are generated corresponding to the intensity of the measurement radiation falling upon it in different wavelength regions, said signals being amplified at a predetermined amplification level **characterised by** a heat of combustion parameter ($b_{\lambda i}$) assigned to a wavelength region, and totalled, whereby from the totalled measurement signals, the heat of combustion of the test gas is determined, **characterised in that** the intensity of the measurement radiation is detected in wavelength regions covering the spectral region in which the oscillation or the harmonic oscillation of the C-H bonds lie, whereby the number of wavelength regions depends on the spectral breadths and average wavelengths of the wavelength regions, in order to detect the intensity of the measurement radiation in the spectral region.

**2.** Method according to Claim 1, **characterised in that** the measurement radiation (2) is spatially split depending upon the wavelength.

**3.** Method according to Claim 1, **characterised in that** the measurement radiation is spectrally split with spectral filters.

**4.** Method according to one of the claims 1 to 3, **characterised in that** the measurement signals from the spectral region of the C-H oscillations and in particular from the region between 3 μm and 4μm are amplified.

**5.** Method according to one of the claims 1 to 3, **characterised in that** measurement signals from the spectral region of the C-H harmonic oscillations and in particular from the region between 1.5 μm and 2 μm are amplified.

## Revendications

**1.** Procédé de détermination photométrique du pouvoir calorifique d'un gaz d'essai, avec lequel le gaz d'essai présentant des liaisons C-H est exposé à un rayonnement de mesure à large bande et le rayonnement de mesure qui traverse le gaz d'essai subit une décomposition spectrale pour ensuite venir frapper un récepteur de rayonnement avec lequel, en fonction de l'intensité du rayonnement de mesure auquel il est exposé dans différentes plages de longueurs d'onde, sont générés des signaux de mesure électriques qui sont amplifiés avec un taux d'amplification prédéfini, lequel est **caractérisé par** un paramètre de pouvoir calorifique ($b_{\lambda 1}$) associé à une plage de longueurs d'onde, puis additionnés, le pouvoir calorifique du gaz d'essai étant déterminé à partir des signaux de mesure additionnés, **caractérisé en ce que** l'intensité du rayonnement de mesure est détectée dans les plages de longueurs d'onde qui comprennent la plage spectrale dans laquelle se trouve l'oscillation ou la sur-oscillation des liaisons C-H, le nombre de plages de longueurs d'onde dépendant de la largeur spectrale et des longueurs d'onde centrales des plages de longueurs d'onde, afin de détecter l'intensité du rayonnement de mesure dans la plage spectrale.

**2.** Procédé selon la revendication 1, **caractérisé en ce que** le rayonnement de mesure (2) est fractionné dans l'espace en fonction de la longueur d'onde.

**3.** Procédé selon la revendication 1, **caractérisé en ce que** le rayonnement de mesure subit une décomposition spectrale à l'aide de filtres spectraux.

**4.** Procédé selon l'une des revendications 1 à 3, **caractérisé en ce que** les signaux de mesure de la plage spectrale des oscillations C-H et notamment de la plage comprise entre 3 μm et 4 μm sont amplifiés.

**5.** Procédé selon l'une des revendications 1 à 3, **caractérisé en ce que** les signaux de mesure de la plage spectrale des sur-oscillations C-H et notamment de la plage comprise entre 1,5 μm et 2 μm sont amplifiés.

**Fig. 1**

# Fig. 2

# Fig. 3

**Fig. 4**